# EUROPEAN PATENT APPLICATION

(11) **EP 4 738 476 A1**
(43) Date of publication of application: **06.05.2026**
(21) Application number: 24856813.1
(22) Date of filing: 21.08.2024
(51) Int. Cl.: H01M 4/66, H01M 4/13, H01M 10/052, H01M 10/058

(54) **ELECTRODE CURRENT COLLECTOR, LITHIUM SECONDARY BATTERY COMPRISING SAME, BATTERY MODULE, AND BATTERY PACK**

(30) Priority: 22.08.2023 KR 20230110180
(71) Applicant: LG Energy Solution, Ltd., Seoul 07335 (KR)
(72) Inventor: KANG, Gyung Soo, Daejeon 34122 (KR); PARK, Min Soo, Daejeon 34122 (KR); YU, Hyung Kyun, Daejeon 34122 (KR)
(74) Representative: Hoffmann Eitle
(86) International application number: PCT/KR2024/012445
(87) International publication number: WO 2025/042202

(57) **Abstract**

An electrode current collector according to the present invention includes a polymer resin layer; a first metal layer disposed on one surface of the polymer resin layer; and a second metal layer disposed on another surface of the polymer resin layer, wherein the first metal layer and the second metal layer include a shape memory alloy (SMA), and the shape memory alloy (SMA) is designed such that an external force is applied to the polymer resin layer through shape deformation when a temperature of the shape memory alloy (SMA) is greater than a predetermined temperature.

## Description

### TECHNICAL FIELD

This application claims the benefit of priority from Korean Patent Application No. 10-2023-0110180, filed on August 22, 2023, the disclosure of which is incorporated by reference herein.

The present invention relates to an electrode current collector, and a lithium secondary battery, a battery module, and a battery pack which include the same.

### BACKGROUND ART

Demand for batteries as an energy source has been significantly increased as technology development and demand with respect to electric vehicles and energy storage systems (ESS) have increased, and accordingly, research is being conducted on batteries that may meet various needs.

Particularly, in order to use the battery for a longer period of time on a single charge, it is necessary to increase capacity of the battery, and a technique for preparing a large-area electrode is essential for increasing the capacity. However, in a process of preparing the large-area electrode, performance of the electrode may be degraded, and there is concern about thermal propagation due to thermal runaway to other electrodes in case of fire.

In a lithium secondary battery, a phenomenon may occur in which a temperature of an electrode is rapidly increased due to thermal and physical factors. The thermal factors include overcharging or overload due to misuse or malfunction of a charger, and, as the physical factors, the phenomenon of the rapid increase in the temperature of the electrode may occur when an internal short circuit occurs due to a contact between negative electrode and positive electrode materials which is caused by damage of a separator due to external impact. If the temperature of the electrode is rapidly increased in this way, the battery becomes very unstable due to a reaction between an electrolyte solution and lithium or generation of hydrogen and oxygen in the battery, a solvent of an electrolyte is decomposed to generate gas, and the decomposition gas of the solvent may ignite and lead to an explosion of the battery.

A conventional lithium secondary battery includes only a single metal layer as an electrode current collector, wherein, specifically, an aluminum single metal layer has been used as a positive electrode current collector, and a copper single metal layer has been used as a negative electrode current collector. However, since these single metal layers have very high electrical conductivity and thermal conductivity, time to reach a high temperature instantaneously due to abnormal behavior of the battery is very short and there is a concern about thermal propagation due to thermal runaway.

Thus, since a weight reduction in comparison to an electrode current collector formed of metal is possible by using an electrode current collector including a polymer resin layer that is disposed between two metal layers, instead of the conventional electrode current collector, energy density per weight may be significantly improved and safety may be improved by causing a short circuit between electrodes in case of fire.

However, with respect to the electrode current collector including the polymer resin layer that is disposed between the two metal layers, mechanical safety against foreign matter, for example, nail penetration may be improved, but there is a need to improve safety against thermal propagation in case of actual fire.

### DISCLOSURE OF THE INVENTION

### TECHNICAL PROBLEM

An aspect of the present invention provides an electrode current collector which may not only have excellent fire safety, heat resistance, and heat shielding effect, but may also be light-weighted to improve energy density, and an electrode assembly and a lithium secondary battery which include the same.

### TECHNICAL SOLUTION

The present invention provides an electrode current collector in order to solve the above-described tasks.
[1] The present invention provides an electrode current collector including a polymer resin layer; a first metal layer disposed on one surface of the polymer resin layer; and a second metal layer disposed on another surface of the polymer resin layer, wherein the first metal layer and the second metal layer include a shape memory alloy (SMA), and the shape memory alloy (SMA) is designed such that an external force is applied to the polymer resin layer through shape deformation when a temperature of the shape memory alloy (SMA) is greater than a predetermined temperature.
[2] The present invention provides the electrode current collector of [1] above, wherein the shape memory alloy (SMA) includes at least one of a copper-zinc alloy, a copper-tin alloy, a magnesium-copper alloy, a nickel-titanium alloy, and a copper-aluminum-nickel alloy.
[3] The present invention provides the electrode current collector of any one or more of [1] or [2] above, wherein an amount of the shape memory alloy (SMA) is in a range of 20 wt% to 100 wt% based on a total weight of the metal layer.
[4] The present invention provides the electrode current collector of any one or more of [1] to [3] above, wherein the polymer resin layer includes at least one selected from the group consisting of a polyester-based resin, an epoxy-based resin, a phenol-based resin, a melamine-based resin, a urethane-based resin, a silicone-based resin, an EVA-based resin, a rubber-based resin, an acrylic-based resin, and a polyetherurethane-based resin.
[5] The present invention provides the electrode current collector of any one or more of [1] to [4] above, wherein a thickness ratio of the polymer resin layer to the first metal layer or the second metal layer is in a range of 1:1 to 1:10.
[6] The present invention provides the electrode current collector of any one or more of [1] to [5] above, wherein the polymer resin layer has a thickness of 3 µm to 18 µm.
[7] The present invention provides the electrode current collector of any one or more of [1] to [6] above, wherein the first metal layer and the second metal layer each independently have a thickness of 10 µm to 30 µm.

The present invention also provides a lithium secondary battery including the above electrode current collector.

[8] The present invention provides a lithium secondary battery which includes an electrode assembly having a structure in which a plurality of electrodes and a plurality of separators are alternatingly stacked, wherein the electrodes each include an electrode current collector and an electrode active material layer disposed on the electrode current collector, and at least one of a plurality of electrode current collectors is the electrode current collector of any one or more of [1] to [7] above.

The present invention also provides a battery module and a battery pack which include the above lithium secondary battery.
[9] The present invention provides a battery module including a plurality of the lithium secondary batteries of [8] above.
[10] The present invention provides a battery pack including a plurality of the battery modules of [9] above.

### ADVANTAGEOUS EFFECTS

An electrode current collector according to the present invention includes a polymer resin layer between two metal layers, wherein the metal layers include a shape memory alloy (SMA). Since the shape memory alloy (SMA) is designed such that an external force is applied to the polymer resin layer through shape deformation when its temperature is greater than a predetermined temperature, it induces an electrical disconnection state between electrodes by additionally pressurizing the polymer resin layer as a shape of the shape memory alloy (SMA) contracts, and thus, it may improve safety.

Also, a lithium secondary battery according to the present invention may not only improve mechanical safety against foreign matter, for example, nail penetration, but may also improve safety against thermal propagation in case of actual fire.

Furthermore, in a case in which a battery module and a batter pack according to the present invention include a plurality of the above-described electrode current collectors, a high-capacity and large-area battery may be achieved by maximizing the safety against the thermal propagation in case of actual fire.

### BRIEF DESCRIPTION OF THE DRAWINGS

FIG. 1 is a cross-sectional view schematically illustrating an electrode current collector according to the present invention.
FIG. 2 and FIG. 3 each are a cross-sectional view illustrating a lithium secondary battery including the electrode current collector according to the present invention.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

### Electrode Current Collector

Hereinafter, an electrode current collector according to the present invention will be described.

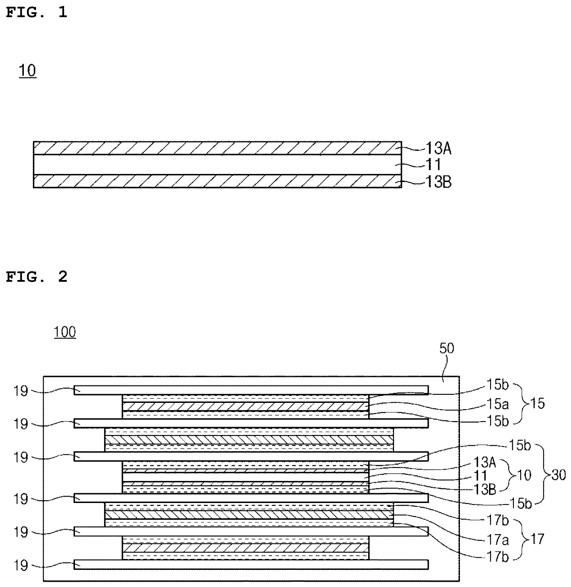

FIG. 1 is a cross-sectional view schematically illustrating the electrode current collector according to the present invention.

Referring to FIG. 1, an electrode current collector 10 according to the present invention includes a polymer resin layer 11, a first metal layer 13A disposed on one surface of the polymer resin layer, and a second metal layer 13B disposed on another surface of the polymer resin layer, wherein the first metal layer 13A and the second metal layer 13B include a shape memory alloy (SMA). The shape memory alloy (SMA) is designed such that an external force is applied to the polymer resin layer through shape deformation when a temperature of the shape memory alloy (SMA) is greater than a predetermined temperature.

A conventional lithium secondary battery includes only a single metal layer as an electrode current collector, wherein, specifically, an aluminum single metal layer has been used as a positive electrode current collector, and a copper single metal layer has been used as a negative electrode current collector. However, since these single metal layers have very high electrical conductivity and thermal conductivity, time to reach a high temperature instantaneously due to abnormal behavior of the battery is very short and there is a concern about thermal propagation due to thermal runaway.

Thus, since a weight reduction in comparison to an electrode current collector formed of metal is possible by using the electrode current collector including a polymer resin layer disposed between two metal layers, instead of the conventional electrode current collector, energy density per weight may be significantly improved and safety may be improved by causing a short circuit between electrodes in case of fire.

However, with respect to the electrode current collector including the polymer resin layer that is disposed between the two metal layers, mechanical safety against foreign matter, for example, nail penetration may be improved, but there is a need to improve safety against thermal propagation in case of actual fire.

Accordingly, the present inventors have devised an electrode current collector including a polymer resin layer and a first metal layer and a second metal layer, which include a shape memory alloy (SMA) and are disposed on both surfaces of the polymer resin layer, by using a property of the shape memory alloy (SMA) in which it returns to its original shape at high temperatures.

An electrode has a structure in which an electrode active material layer is disposed on an electrode current collector, wherein an electrode tab is formed to protrude from one side of the electrode, and an electrode lead may be connected to the electrode tab to transmit electricity generated in the electrode to the outside.

The first metal layer and the second metal layer according to the present invention include the shape memory alloy (SMA), and the electrode current collector may contract as the shape memory alloy (SMA) contracts at high temperatures. Accordingly, the electrode tab in contact with the electrode current collector contracts, but the electrode lead does not contract because it is fixed by welding to a bus bar or the like. Thus, the tab contracted as described above induces an electrical disconnection state with the electrode lead, and has a time delay effect on thermal propagation in case of battery fire.

Also, the electrode current collector according to the present invention may improve fire safety, heat resistance, and heat shielding effect.

### (1) Polymer Resin Layer

The polymer resin layer is a matrix resin, wherein it prevents abnormal heat transfer between the electrode current collector and the electrode active material layer, and may also play a role in reducing a weight of the electrode current collector and mitigating external impact.

The polymer resin layer, for example, may include at least one selected from the group consisting of a polyester-based resin, an epoxy-based resin, a phenol-based resin, a melamine-based resin, a urethane-based resin, a silicone-based resin, an EVA-based resin, a rubber-based resin, an acrylic-based resin, and a polyetherurethane-based resin.

Specifically, the polymer resin layer may include at least one selected from the group consisting of polyimide (PI), polyethylene terephthalate (PET), polybuthylene terephthalate (PBT), polyethylene naphthalate (PEN), polyacrylonitrile (PAN), polyethylene (PE), polyamide (PA), and polypropylene (PP). Also, the polymer resin layer may be a thermosetting resin or a photocurable resin, and may preferably include an ultraviolet-curable resin.

If necessary, the polymer resin layer may contain a photoinitiator such as a benzoin compound, an acetophenone compound, an acylphosphine oxide compound, a titanocene compound, a thioxanthone compound, or a peroxide compound, or a photoinitiator such as an amine or a quinone, and may additionally contain a curing accelerator such as amine-based, imidazole-based, phosphorus-based, boron-based, and phosphorus-boron-based curing accelerators. Furthermore, the polymer resin layer may contain a thermal initiator such as a peroxide such as azobisnitrile, benzoyl peroxide, or acetyl peroxide.

The polymer resin layer may have a thickness of 3 µm to 18 µm, preferably 3 µm to 15 µm, and more preferably 4 µm to 8 µm. In a case in which the thickness of the polymer resin layer is less than 3 µm, since the polymer resin layer is excessively thin, it may prevent abnormal heat transfer, and an effect of reducing the weight of the electrode current collector and mitigating the external impact may be insignificant. In contrast, in a case in which the thickness is greater than 18 µm, a thickness of a cell is significantly increased to increase resistance, and it may adversely affect the energy density. In a case in which the thickness of the polymer resin layer satisfies the above numerical range, energy density of the cell may be increased while inducing an electrical disconnection state with other electrodes or maintaining physical electrical insulation.

### (2) Metal Layer

The first metal layer and/or the second metal layer include a shape memory alloy (SMA). The shape memory alloy (SMA) is an alloy with strong resilience, wherein it denotes an alloy having a property of returning to its original shape before deformation at high temperatures even if it is deformed into a different shape. The shape memory alloy (SMA) may be prepared through a shape memory process by using a material capable of shape memory, and has characteristics in that the shape thus memorized is deformed at high temperatures.

The shape memory alloy (SMA) is designed such that an external force is applied to the polymer resin layer through shape deformation when its temperature is greater than a predetermined temperature. Specifically, since the electrode current collector according to the present invention may contract as the shape memory alloy (SMA) contracts in a high-temperature environment by using the property of the shape memory alloy (SMA), the electrode current collector according to the present invention has a time delay effect on thermal propagation in case of battery fire by inducing the electrical disconnection state with other electrodes.

The shape memory alloy (SMA) may include at least one of a copper-zinc alloy, a copper-tin alloy, a magnesium-copper alloy, a nickel-titanium alloy, and a copper-aluminum-nickel alloy.

An amount of the shape memory alloy (SMA) may be in a range of 20 wt% to 100 wt%, preferably 30 wt% to 100 wt%, and more preferably 50 wt% to 100 wt% based on a total weight of the metal layer. In a case in which the amount of the shape memory alloy (SMA) satisfies the above numerical range, the shape memory alloy (SMA) may be easily applied while the electrode current collector may contract as the shape memory alloy (SMA) contracts at high temperatures during abnormal behavior of the battery. This may induce the electrical disconnection state between the electrodes of the battery to improve battery safety.

The first metal layer and/or the second metal layer may additionally include stainless steel, aluminum, copper, nickel, titanium, fired carbon, or aluminum or stainless steel that is surface-treated with one of carbon, nickel, titanium, silver, or the like, and an aluminum-cadmium alloy, if necessary, in addition to the shape memory alloy (SMA), and may specifically include aluminum when the electrode current collector is a positive electrode, and copper when the electrode current collector is a negative electrode.

Also, microscopic irregularities may be formed on surfaces of the first metal layer and/or the second metal layer to strengthen a bonding force with an electrode material mixture layer, and the first metal layer and/or the second metal layer may be used in various shapes such as that of a film, a sheet, a foil, a net, a porous body, a foam body, a non-woven fabric body, and the like.

The first metal layer and/or the second metal layer may have a thickness of 10 µm to 30 µm, preferably 18 µm to 28 µm, and more preferably 18 µm to 25 µm. In a case in which the thickness of the first metal layer and/or the second metal layer is less than 10 µm, since the first metal layer and/or the second metal layer is excessively thin, there is a problem in that it is difficult to maintain its shape as the electrode, because it is difficult to perform a role as a support, and it is difficult to control physical properties of the electrode. In contrast, in a case in which the thickness is greater than 30 µm, since the weight and thickness of the cell may be excessively increased, the energy density may be reduced.

A thickness ratio of the polymer resin layer to the first metal layer and/or the second metal layer may be in a range of 1:1 to 1:10, preferably 1:1.5 to 1:5, and more preferably 1:1.5 to 1:3. In a case in which the thickness ratio of the polymer resin layer to the first metal layer and/or the second metal layer satisfies the above numerical range, there is an effect of improving safety of the battery through an electrical short circuit while increasing the energy density of the cell.

### Lithium Secondary Battery, Battery Module, and Battery Pack

A lithium secondary battery according to the present invention includes the above-described electrode current collector of the present invention. The lithium secondary battery according to the present invention includes an electrode assembly having a structure in which a plurality of electrodes and a plurality of separators are alternatingly stacked, wherein the electrodes each include an electrode current collector and an electrode active material layer disposed on the electrode current collector, and at least one of the plurality of electrode current collectors is the above-described electrode current collector of the present invention.

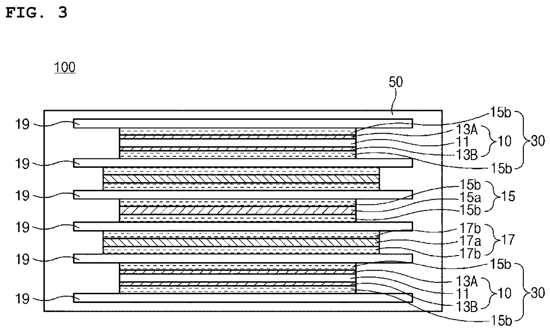

FIG. 2 and FIG. 3 each are a cross-sectional view illustrating a lithium secondary battery including the electrode current collector according to the present invention.

Referring to FIGS. 2 and 3, specifically, a lithium secondary battery 100 according to the present invention includes an electrode assembly 50 in which a positive electrode 15, a separator 19, and a negative electrode 17 are sequentially stacked, wherein the separator 19 is disposed between the positive electrode 15 and the negative electrode 17, the positive electrode 15 includes a positive electrode current collector 15a and a positive electrode active material layer 15b stacked on the positive electrode current collector, and the negative electrode 17 includes a negative electrode current collector 17a and a negative electrode active material layer 17b stacked on the negative electrode current collector, wherein at least one of the positive electrode current collector and the negative electrode current collector is the above-described electrode current collector 10 including the shape memory alloy (SMA).

The lithium secondary battery 100 according to the present invention may include the at least one electrode current collector 10 including the shape memory alloy (SMA) described above, and may preferably include the two or more electrode current collectors 10. Specifically, in the electrode assembly 50 having a structure in which the plurality of electrodes and the plurality of separators are alternatingly stacked, an electrode 30, which includes the above-described electrode current collector 10 including the shape memory alloy (SMA), may be disposed on an outermost surface of the electrode assembly 50. The lithium secondary battery 100 according to the present invention may be composed of a positive electrode or negative electrode having a structure, in which the polymer resin layer is disposed between the two metal layers including the shape memory alloy (SMA), as an outermost electrode, or may be composed of a positive electrode or negative electrode having a structure, in which the polymer resin layer is disposed between the two metal layers including the shape memory alloy (SMA), as an electrode located at a center portion of the battery. In a case in which the above-described electrode 30 is disposed on the outermost surface of the electrode assembly 50, the electrode current collector may contract as the shape memory alloy (SMA) contracts at high temperatures during the abnormal behavior of the battery. Accordingly, the electrode tab in contact with the electrode current collector contracts, but the electrode lead does not contract because it is fixed by welding to the bus bar or the like. Thus, the tab contracted as described above induces the electrical disconnection state with the electrode lead, and has the time delay effect on thermal propagation in case of battery fire.

Since the electrode current collector has been described above, a detailed description thereof will be omitted, and only the remaining components will be described in detail below.

### (Positive Electrode)

The positive electrode current collector may include a metal having high conductivity, and is not particularly limited as long as it has no reactivity in a voltage range of the battery and the positive electrode active material layer is easily adhered thereto. As the positive electrode current collector, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 µm to 500 µm, and microscopic irregularities may be formed on the surface of the collector to improve adhesion of the positive electrode active material. The positive electrode current collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, more specifically, 90 wt% to 98 wt% based on a total weight of the positive electrode active material layer.

The conductive agent is used to provide conductivity to the electrode, wherein any conductive agent may be used without particular limitation as long as it has suitable electron conductivity without causing chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, preferably 0.1 wt% to 9 wt%, and more preferably 0.1 wt% to 5 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode may be prepared according to a typical method of preparing a positive electrode except that the above-described positive electrode active material is used. Specifically, a positive electrode slurry composition, which is prepared by dissolving or dispersing the positive electrode active material as well as optionally the binder, the conductive agent, and a dispersant in a solvent, is applied to the positive electrode current collector, and the positive electrode may then be prepared by drying and rolling the coated positive electrode current collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode current collector.

### (Separator)

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### (Electrolyte)

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexa methyl phosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

### (Negative Electrode)

The negative electrode includes a negative electrode current collector and a negative electrode active material layer disposed on the negative electrode current collector.

The negative electrode current collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 µm to 500 µm, and, similar to the positive electrode current collector, microscopic irregularities may be formed on the surface of the collector to improve adhesion of a negative electrode active material. The negative electrode current collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt%, 82 wt% to 99 wt%, or 84 wt% to 99 wt% based on a total weight of the negative electrode active material layer.

The binder is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 1 wt% to 30 wt%, 1 wt% to 20 wt%, or 1 wt% to 10 wt% based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating a negative electrode slurry composition, which is prepared by dissolving or dispersing optionally the binder and the conductive agent as well as the negative electrode active material in a solvent, on the negative electrode current collector and drying the coated negative electrode current collector, or may be prepared by casting the negative electrode slurry composition on a separate support and then laminating a film separated from the support on the negative electrode current collector.

### (Battery Case)

Also, the lithium secondary battery may further optionally include a battery container accommodating an electrode assembly of the positive electrode, the separator, and the negative electrode, and a sealing member sealing the battery container.

Furthermore, since the lithium secondary battery according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Particularly, in order to use the battery for a longer period of time on a single charge, it is necessary to increase capacity of the battery, and a technique for preparing a large-area electrode is essential for increasing the capacity. However, in a process of preparing the large-area electrode, performance of the electrode may be degraded, and there is concern about thermal propagation due to thermal runaway to other electrodes in case of fire.

Thus, according to another embodiment of the present invention, a battery module including a plurality of the lithium secondary batteries and a battery pack including a plurality of the battery modules are provided.

The battery module denotes a battery assembly in which a certain number of the lithium secondary batteries are bundled and put in a frame to protect them from external impact, heat, vibration, etc. The battery pack denotes a final form of a battery system that is installed in an electric vehicle, etc.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

In a case in which the battery module and the batter pack according to the present invention include a plurality of the above-described electrode current collectors, a high-capacity and large-area battery may be achieved by maximizing the safety against the thermal propagation in case of actual fire.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

An electrode current collector was prepared by forming a first metal layer and a second metal layer by physical vapor deposition (PVD) of an Ni₅₀Ti₅₀ alloy to a thickness of 18 µm on both surfaces of polyethylene terephthalate (PET) having a thickness of 6 µm.

### <Preparation of Lithium Secondary Battery>

A positive electrode active material (NCM65 1520), a conductive agent (Li-435), and a PVDF binder (KF9700, AD-c01) were mixed in a weight ratio of 96.5:1.5:2.0 in N-methylpyrrolidone to prepare a positive electrode slurry.

One surface of the above-prepared electrode current collector was coated with the positive electrode slurry, dried at 140°C, and then rolled to prepare a positive electrode.

Graphite was used as a negative electrode.

An electrode assembly was prepared by disposing a separator between the positive electrode prepared by the above-described method and the negative electrode, the electrode assembly was disposed in a battery case, and an electrolyte solution was then injected into the case to prepare a battery cell. The electrolyte solution was prepared by dissolving 0.7 M LiPF₆ in a mixed organic solvent in which ethylene carbonate(EC) :propylene carbonate (PC) :ethyl methyl carbonate(EMC) were mixed in a volume ratio of 2:1:7.

### Example 2

A battery cell was prepared in the same manner as in Example 1 except that a plurality of the electrode assemblies prepared by the above-described method were included.

### Comparative Example 1

A battery cell was prepared in the same manner as in Example 1 except that the battery cell was composed of only an electrode current collector formed of 12 µm thick aluminum metal which is a typical metal current collector.

### Comparative Example 2

A battery cell was prepared in the same manner as in Example 1 except that an electrode current collector was used in which a first metal layer and a second metal layer were formed by physical vapor deposition (PVD) of aluminum metal to a thickness of 1 µm on both surfaces of polyethylene terephthalate (PET) having a thickness of 6 µm.

### Experimental Example 1

For the lithium secondary battery cells respectively prepared in Examples 1 and 2 and Comparative Examples 1 and 2, experiments were conducted on 1) a time delay effect on thermal propagation, 2) safety against physical impact, and 3) safety against nail penetration. Experimental results are presented in [Table 1] below. In this case, in [Table 1], the mark "⊚" indicates very good, the mark "o" indicates good, the mark "Δ" indicates average, and the mark "X" indicates poor.

Specifically, experimental methods for 1) the time delay effect on thermal propagation, 2) the safety against physical impact, and 3) the safety against nail penetration are as follows.
1) Five of the above-prepared battery cells were formed into one module, and heat was applied to the one battery cell at a rate of 0.5°C/sec using a heating pad. Heat to the adjacent cell was measured using a thermocouple to evaluate whether there was a time delay in heat transfer.
2) Mechanical safety of each battery cell was evaluated by measuring the presence or absence of ignition of the battery cell using a method of freely dropping a rod with a diameter of 15.8 mm from a height of 610 mm into a center portion of the battery cell in a state in which the prepared battery cell was charged at 0.2 C to 4.4 V in a constant current/constant voltage (CC/CV) mode.
3) Mechanical safety of each battery cell was evaluated based on the presence or absence of ignition of the battery cell, an amount of smoke generated, and a size of flame at the time of ignition by performing a nail penetration test in which the prepared battery cell was penetrated at a speed of 0.1 mm/s using a sharp nail type.

**[Table 1]**

| | 1) Time delay effect on thermal propagation | 2) Safety against physical impact | 3) Safety against nail penetration |
|---|---|---|---|
| Example 1 | ○ | ○ | ○ |
| Example 2 | ⊚ | ⊚ | ⊚ |
| Comparative Example 1 | X | Δ | X |
| Comparative Example 2 | Δ | ○ | ○ |

From [Table 1], with respect to the battery cells prepared by Examples 1 and 2, it may be confirmed that 1) the time delay effect on thermal propagation, 2) the safety against physical impact, and 3) the safety against nail penetration were better than those of the battery cells prepared by Comparative Examples 1 and 2.

### [Description of the Symbols]

10: Electrode Current Collector
11: Polymer Resin Layer
13A, 13B: First Metal Layer, Second Metal Layer
15: Positive Electrode
15a: Positive electrode current collector
15b: Positive Electrode Active Material Layer
17: Negative Electrode
17a: Negative electrode current collector
17b: Negative Electrode Active Material Layer
19: Separator
30: Electrode Including the Electrode Current Collector 10
50: Electrode Assembly
100: Lithium Secondary Battery

## Claims

1. An electrode current collector comprising:
a polymer resin layer,
a first metal layer disposed on one surface of the polymer resin layer, and
a second metal layer disposed on another surface of the polymer resin layer,
wherein the first metal layer and the second metal layer comprise a shape memory alloy (SMA), and
the shape memory alloy (SMA) is designed such that an external force is applied to the polymer resin layer through shape deformation when a temperature of the shape memory alloy (SMA) is greater than a predetermined temperature.

2. The electrode current collector of claim 1, wherein the shape memory alloy (SMA) comprises at least one of a copper-zinc alloy, a copper-tin alloy, a magnesium-copper alloy, a nickel-titanium alloy, and a copper-aluminum-nickel alloy.

3. The electrode current collector of claim 1, wherein an amount of the shape memory alloy (SMA) is in a range of 20 wt% to 100 wt% based on a total weight of the metal layer.

4. The electrode current collector of claim 1, wherein the polymer resin layer comprises at least one selected from the group consisting of a polyester-based resin, an epoxy-based resin, a phenol-based resin, a melamine-based resin, a urethane-based resin, a silicone-based resin, an EVA-based resin, a rubber-based resin, an acrylic-based resin, and a polyetherurethane-based resin.

5. The electrode current collector of claim 1, wherein a thickness ratio of the polymer resin layer to the first metal layer or the second metal layer is in a range of 1:1 to 1:10.

6. The electrode current collector of claim 1, wherein the polymer resin layer has a thickness of 3 µm to 18 µm.

7. The electrode current collector of claim 1, wherein the first metal layer and the second metal layer each have a thickness of 10 µm to 30 µm.

8. A lithium secondary battery comprising:
an electrode assembly having a structure in which a plurality of electrodes and a plurality of separators are alternatingly stacked,
wherein the electrodes each comprise an electrode current collector and an electrode active material layer disposed on the electrode current collector, and
at least one of a plurality of electrode current collectors is the electrode current collector of any one of claims 1 to 7.

9. A battery module comprising a plurality of the lithium secondary batteries of claim 8.

10. A battery pack comprising a plurality of the battery modules of claim 9.
